Europäisches Patentamt

**European Patent Office**

Office européen des brevets

(19)

(11) Veröffentlichungsnummer: **0 100 077**
**B1**

(12) # EUROPÄISCHE PATENTSCHRIFT

(45) Veröffentlichungstag der Patentschrift:
22.06.88

(51) Int. Cl.⁴: **H 04 Q 11/04**, H 04 J 3/06

(21) Anmeldenummer: **83107223.6**

(22) Anmeldetag: **22.07.83**

(54) **Schaltungsanordnung zur Takterzeugung in Fernmeldeanlagen, insbesondere Zeitmultiplex-Digital-Vermittlungsanlagen.**

(30) Priorität: **26.07.82 DE 3227849**

(43) Veröffentlichungstag der Anmeldung:
**08.02.84 Patentblatt 84/6**

(45) Bekanntmachung des Hinweises auf die Patenterteilung:
**22.06.88 Patentblatt 88/25**

(84) Benannte Vertragsstaaten:
**FR GB SE**

(56) Entgegenhaltungen:
**EP - A - 0 100 076**
**DE - A - 2 907 608**

**TELCOM REPORT, Band 4, 1981, Beiheft "Digitalvermittlungssystem EWSD", Seiten 43-48, Passau, DE; H. GRÜNER u.a.: "Synchronisation der Vermittlungseinrichtungen in Digitalnetzen" THE POST OFFICE ELECTRICAL ENGINEERS' JOURNAL, Band 73, Teil 2, Juli 1980, Seiten 88-91, London, GB; R.A. BOULTER: "System X: subsystems. Part 2 - The network synchronization subsystem"**

(73) Patentinhaber: **Siemens Aktiengesellschaft Berlin und München, Wittelsbacherplatz 2, D-8000 München 2 (DE)**

(72) Erfinder: **Flasche, Ulrich, Ing. grad., Wolfratshauser Strasse 64a, D-8023 Pullach (DE)**

## Beschreibung

Durch die DE-A-2 907 608 ist bereits eine Schaltungsanordnung für Fernmeldeanlagen, insbesondere PCM-Fernsprechvermittlungsanlagen, mit einer doppelt vorgesehenen Amtstaktversorgungsanordnung bekannt geworden, von welcher der jeweils eine der beiden Amtstakterzeuger einen unabhängig von dem jeweils anderen Amtstakterzeuger erzeugten Amtstakt liefert und der jeweils andere (geführte) Amtstakterzeuger einen mit dem von dem jeweils einen (führenden) Amtstakterzeuger gelieferten Amtstakt zumindest angenähert phasengleich synchronisierten Amtstakt liefert und seinen Amtstakt mit dem Amtstakt des jeweils einen Amtstakterzeugers vergleicht und bei Feststellung einer einen Grenzwert überschreitenden Phasendifferenz eine Halbperiode des geführten Amtstaktes mit Hilfe einer Regelungseinrichtung bei nacheilendem geführtem Amtstakt verkürzt und bei voreilendem geführtem Amtstakt verlängert. Hierin ist vorgesehen, dass die Regelungseinrichtung einen Phasensynchronisationsvorgang nur unter der Voraussetzung in die Wege leitet, dass die Phasendifferenz des geführten Amtstaktes gegenüber dem führenden Amtstakt entweder in positiver Richtung oder in negativer Richtung einen Grenzwert überschreitet. Die Phasensynchronisierung ist also im bekannten Falle mit einer gewissen Hysterese behaftet, so dass Jittererscheinungen des führenden Amtstaktes in einer Grössenordnung unterhalb derjenigen des erwähnten Grenzwertes unbeachtlich bleiben. Dadurch werden unnötige Phasensynchronisierungsvorgänge wechselnden Vorzeichens vermieden. Indessen aber hat diese Hysterese auch zur Folge, dass grössere Phasendifferenzen oder grössere Amtstaktfrequenzabweichungen nur begrenzt ausgeregelt werden können.

In Schaltungsanordnungen dieser bekannten Art geht es nun u.a. ganz allgemein darum, mit möglichst einfachen Mitteln Vorkehrungen zu treffen, um Phasendifferenzen oder Amtstaktfrequenzabweichungen erfassen zu können, die wegen der vorgesehenen Hystereseeigenschaft der Regelungseinrichtung Schwierigkeiten bezüglich ihrer Ausregelung bereiten.

Auf eine Schaltungsanordnung eingangs angegebene Art bezieht sich auch ein Artikel in einem Beiheft «Digitalvermittlungssystem EWSD», der Zeitschrift «telcom report», 4. Jahrgang/1981, auf Seite 43ff. Darin ist in der linken Spalte auf Seite 46 in den Zeilen 37 bis 52 in obigem Zusammenhang angegeben, dass bei einem weiteren Voreilen bzw. Nacheilen des Amtstaktes innerhalb eines Zeitraumes nach bereits erfolgter Amtstaktverkürzung bzw. Amtstaktverlängerung ein Alarmsignal eingeschaltet wird. In diesem weiteren bekannten Falle ist festzustellen, dass gegebenenfalls zwei Korrekturen nacheinander erfolgen. Hierfür ist sogar ausdrücklich ein bestimmter Zeitraum angegeben (Seite 16, linke Spalte, Zeile 49). Dabei ist der bekannten Beschreibung also nur zu entnehmen, dass die Alarmgabe davon abhängt, dass zwei Korrekturen innerhalb dieses bestimmten Zeitraumes stattfinden. Es muss hierfür eine Abmessung dieser Zeit erfolgen, d.h. im bekannten Falle muss eine Zeitabmesseinrichtung vorgesehen sein.

Die Erfindung bezieht sich nun also auf eine Schaltungsanordnung für Fernmeldeanlagen, insbesondere PCM-Fernsprechvermittlungsanlagen, mit einer doppelt vorgesehenen Amtstaktversorgungsanordnung, von welcher der jeweils eine der beiden Amtstakterzeuger einen unabhängig von dem jeweils anderen Amtstakterzeuger erzeugten Amtstakt liefert und der jeweils andere (geführte) Amtstakterzeuger einen mit dem von dem jeweils einen (führenden) Amtstakterzeuger gelieferten Amtstakt zumindest angenähert phasengleich synchronisierten Amtstakt liefert und seinen Amtstakt mit dem Amtstakt des jeweils einen Amtstakterzeugers vergleicht und bei Feststellung einer einen Grenzwert überschreitenden Phasendifferenz eine Halbperiode des geführten Amtstaktes mit Hilfe einer Regelungseinrichtung bei nacheilendem geführtem Amtstakt verkürzt und bei voreilendem geführtem Amtstakt verlängert und bei weiterhin voreilendem bzw. nacheilendem Amtstakt innerhalb eines Zeitraumes nach bereits erfolgter Amtstaktverkürzung bzw. Amtstaktverlängerung ein Alarmsignal einschaltet.

Durch die Erfindung soll erreicht werden, dass die für eine erforderlich werdende Amtstaktverkürzung bzw. Amtstaktverlängerung sowie ggfs. für eine Alarmsignalgabe vorzunehmende Zeitabmessung in der Weise in Abhängigkeit von der Amtstaktfrequenz erfolgt, dass diese Zeitabmessung auch bei verschiedenen Amtstaktfrequenzen diese Verkürzung bzw. Verlängerung und ggfs. Alarmsignale zu bewerkstelligen vermag.

Mit Hilfe der Erfindung wird dies dadurch erreicht, dass der jeweils geführte Amtstakterzeuger ein erstes von zwei gleichen, und entweder eine Verkürzung oder eine Verlängerung einer Halbperiode seines Amtstakts anzeigenden Schaltkennzeichen mit Hilfe eines durch den Amtstakt selbst fortgeschalteten und dessen Impulse abzählenden ersten Schieberegisters speichert und bei einer erneuten Überschreitung des Grenzwertes innerhalb eines durch eine vorgegebene Anzahl von Amtstaktperioden begrenzten und mit Hilfe eines ebenfalls durch den Amtstakt fortgeschalteten und dessen Impulse abzählenden zweiten Schieberegisters abgemessenen Zeitraumes die Abgabe des Alarmsignals anstelle einer erneuten Verkürzung oder Verlängerung einer Halbperiode des Amtstaktes bewirkt.

Gemäss einer solchen Schaltungsanordnung gemäss der Erfindung mag die Amtstaktfrequenz nunmehr ganz beliebig festgelegt werden: In jedem Falle erfolgt die jeweils erforderlich werdende Amtstaktverlängerung bzw. eine umgekehrt entsprechende Amtstaktverkürzung oder eine Alarmsignalgabe in Relation zu der jeweiligen Anzahl von Amtstaktimpulsen innerhalb einer Zeitspanne, in der die angesprochene Voreilung bzw. Nacheilung unmittelbar und ohne Unterbrechung aufgetreten ist.

Die Beschreibung betrifft auch den Gegenstand der Patentanmeldung EP-A-100 077, veröffentlicht am 8.2.1984. Hierauf sei mit einem Zitat der Zusammenfassung des dort beanspruchten Gegenstandes im anschliessenden Absatz verwiesen:

In einer Schaltungsanordnung für Zeitmultiplex-Digital-Fernmeldevermittlungsanlagen werden zwei untereinander allenfalls begrenzte Phasendifferenzen aufweisende Takte durch doppelt vorgesehene Takterzeuger (CCG', CCG'') phasenverglichen, wobei eine Taktperiode des einen Taktes um eine Zwischentaktperiode verkürzt bzw. verlängert wird. Dabei ist ein Takterzeuger «Master» (z.B. CCG') der andere «Slave» (z.B. CCG''). Letzterer überwacht Takt des Masters (z.B. CCG') und wird bei dessen Ausfall selber Master (z.B. CCG''). Es wird nun die Verkürzung oder die Verlängerung der Taktperiode um eine Zeitspanne verzögert, die mindestens so gross ist wie der Zeitbedarf für eine Erkennung des Taktausfalls und die anschliessende Slave-Master-Umschaltung. Bei diesem Taktausfall täuscht der Signalzustand auf der Taktleitung (z.B. T'') Dauer-Eins zunächst Nacheilen – bzw. Dauer-Null Voreilung – des geführten Amtstaktes vor. Jedoch verhindert die Verzögerung eine solche Falschdeutung des Taktausfalles.

Anhand der Zeichnungen wird ein Ausführungsbeispiel der Erfindung beschrieben. Zunächst wird das Ausführungsbeispiel im allgemeinen Sinn erläutert. Weiter unten geht die Erfindung genauer auf die erfindungsgemässen Zusammenhänge des Ausführungsbeispiels ein. Es zeigt

Fig. 1 schematisch ein Ausführungsbeispiel eine Schaltungsanordnung zur Takterzeugung gemäss der Erfindung;

Fig. 2 zeigt ebenfalls in Form eines Ausführungsbeispiels schaltungstechnische Einzelheiten der Schaltungsanordnung nach Fig. 1

Fig. 3 und 4 schliesslich verdeutlichen durch entsprechende Schaltzustandsdiagramme allgemein die Wirkungsweise der Schaltungsanordnung nach Fig. 2.

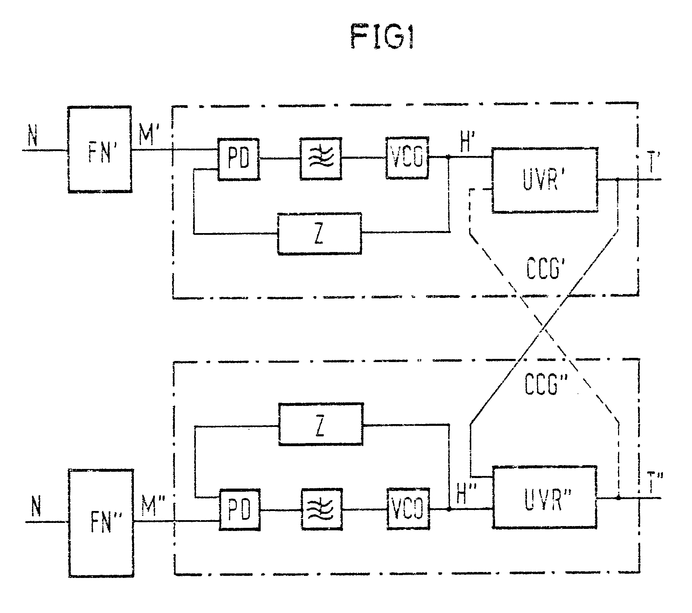

Die Zeichnung Fig. 1 zeigt schematisch ein Ausführungsbeispiel einer Schaltungsanordnung zur Takterzeugung mit einer doppelt vorgesehenen Amtstakterzeugeranordnung CCG', CCG'' gemäss der Erfindung. Der eine der beiden Amtstakterzeuger, beispielsweise der Amtstakterzeuger CCG', möge an seinem Taktausgang T' einen von ihm unabhängig von dem anderen Amtstakterzeuger CCG'' erzeugten Amtstakt mit einer Taktfrequenz von beispielsweise 2,048 MHz liefern; der Amtstakterzeuger CCG'' möge einen mit dem von dem Amtstakterzeuger CCG' gelieferten Amtstakt zumindest angenähert phasengleich synchronisierten Amtstakt gleicher Frequenz liefern. Hierbei werden die beiden Amtstakterzeuger CCG' und CCG'' jeweils durch einen Mastertakt M' bzw. M'' mit einer Taktfrequenz von beispielsweise 2,048 MHz in der Taktfrequenz servosynchronisiert, der dem betreffenden Amtstakterzeuger CCG' bzw. CCG'' von einer von einem Normaltakt von beispielsweise ebenfalls 2,048 MHz beaufschlagten Frequenznachsteuereinrichtung FN' bzw. FN'' her zugeführt wird. Solche Frequenznachsteuereinrichtungen, die im wesentlichen einen PLL-Oszillator und einen Speicher für die jeweilige Regelgrösse aufweisen, in welchem die jeweils gespeicherte Regelgrösse bei einem Ausfall des Normaltakts erhalten bleibt, sind grundsätzlich (z.B. aus der DE-B 2 636 150) bekannt, weshalb sich hier weitere Erläuterungen dazu erübrigen; genügt hier zu erwähnen, dass solche Frequenznachsteuerungseinrichtungen eine geforderte Frequenztoleranz der Tastertakte M', M'' von $10^{-9}$/d zu gewährleisten vermögen.

Es sei hier bemerkt, dass der Normaltakt N seinerseits direkt von einem zentralen Normaltaktgenerator herrühren kann, an den eine Vielzahl gleicher oder ähnlicher Schaltungsanordnungen parallel angeschlossen sind; der Normaltakt N kann aber von einem zentralen Normaltaktgenerator her auch über eine Kettenschaltung von jeweils master-slave-betriebenen Taktgeneratoren bzw. Frequenznachsteuerschaltungen abgeleitet sein.

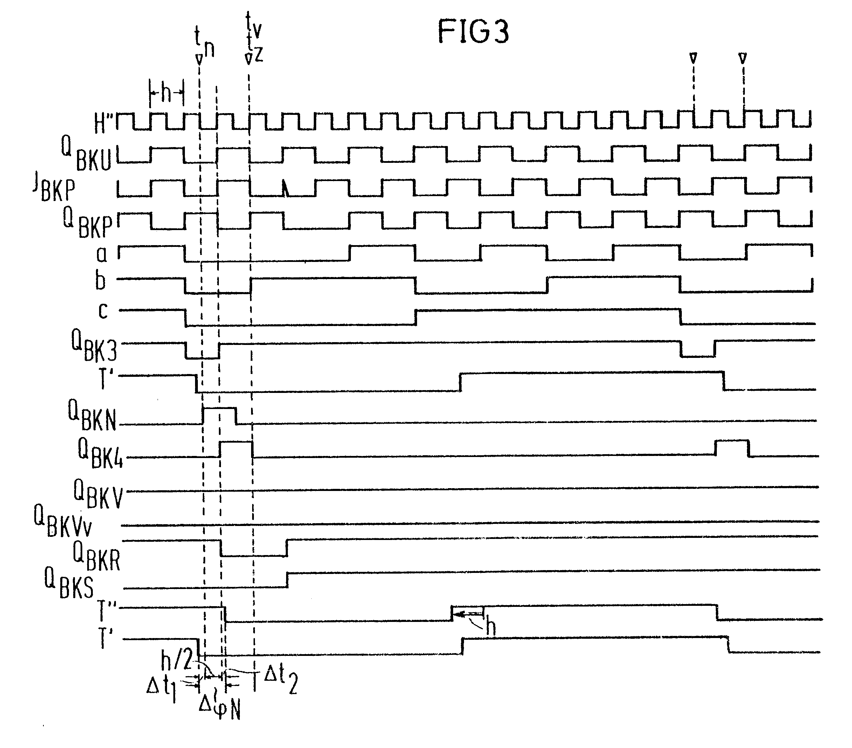

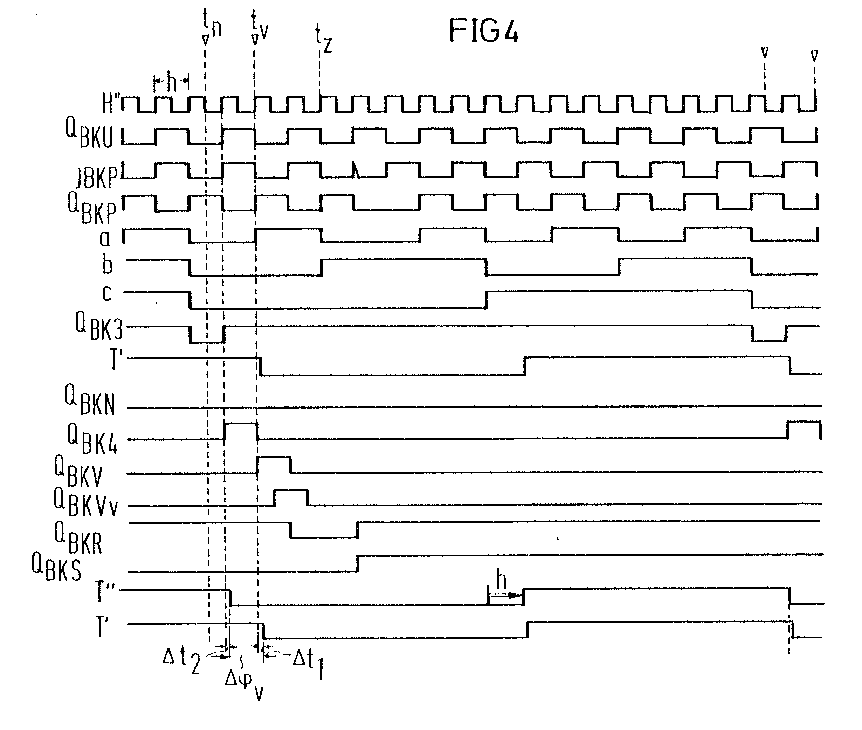

Die beiden Mastertakte M' und M'' können sich in ihrer Phasenlage um bis zu $2\pi$ (entsprechend 488 ns bei einer Mastertaktfrequenz von 2,048 MHz) unterscheiden. Damit sich dennoch eine Phasendifferenz zwischen den beiden Amtstakten T' und T'' in den gewünschten Grenzen von beispielsweise 35 ns hält, erzeugen nun sowohl der führende Amtstakterzeuger CCG' als auch der von ihm geführte Amtstakterzeuger CCG'', durch den jeweils zugeführten Mastertakt M' bzw. M'' servosynchronisiert, einen Zwischentakt H' bzw. H'' mit einer Taktperiode h (in Fig. 3 und Fig. 4) von beispielsweise 30,52 ns (bei einer Zwischentaktfrequenz von 32,768 MHz), die höchstens gleich der maximal zugelassenen Phasendifferenz (im Beispiel 35 ns) zwischen den von den beiden Amtstakterzeugern CCG' und CCG'' gelieferten Amtstakten T' und T'' ist. Dies geschieht in der Schaltungsanordnung nach Fig. 1 jeweils in einem einen Phasendiskriminator PD, einen Tiefpass, einen in der Frequenz steuerbaren Oszillator VCO und einen Frequenzuntersetzer Z umfassenden PLL-Zwischentaktgenerator. Solche PLL-Taktgeneratoren sind grundsätzlich (z.B. aus «Principles of Colour Television», John Wiley & Sons Inc., New York 1956, S. 180; ELEKTRONIK (1973)8, 285–287) bekannt, weshalb sich hier weitere Erläuterungen dazu erübrigen.

Dem vom Mastertakt M'' servosynchronisierten Zwischentaktgenerator C-PD-VCO des geführten Amtstakterzeugers CCG'' ist eine digitale Taktuntersetzungs- und Phasensynchronisierungsschaltung UVR'' nachgeschaltet, die mit einem Vergleichseingang an den Ausgang T' des führenden Amtstakterzeugers CCG' angeschlossen ist und an deren Ausgang T'' der Amtstakt des geführten Amtstakterzeugers CCG'' auftritt. In dieser digitalen Taktuntersetzungs- und Phasensynchronisierungsschaltung UVR'' wird der Amtstakt T'' des geführten Amtstakterzeugers CCG'' mit dem Amtstakt T' des führenden Amtstakterzeugers CCG' verglichen, wobei bei Feststellung einer einen Grenzwert in der Grössenordnung einer Zwischentaktperiode überschreitenden Phasendifferenz zwischen den beiden Amtstakten eine Halbperiode des geführten Amtstaktes T'' um die Länge einer Zwischentaktperiode bei nacheilendem geführtem Amtstakt T'' verkürzt und bei voreilendem geführtem Amtstakt T'' verlängert wird, wie dies nachfolgend anhand des Ausführungsbeispiels noch näher erläutert wird.

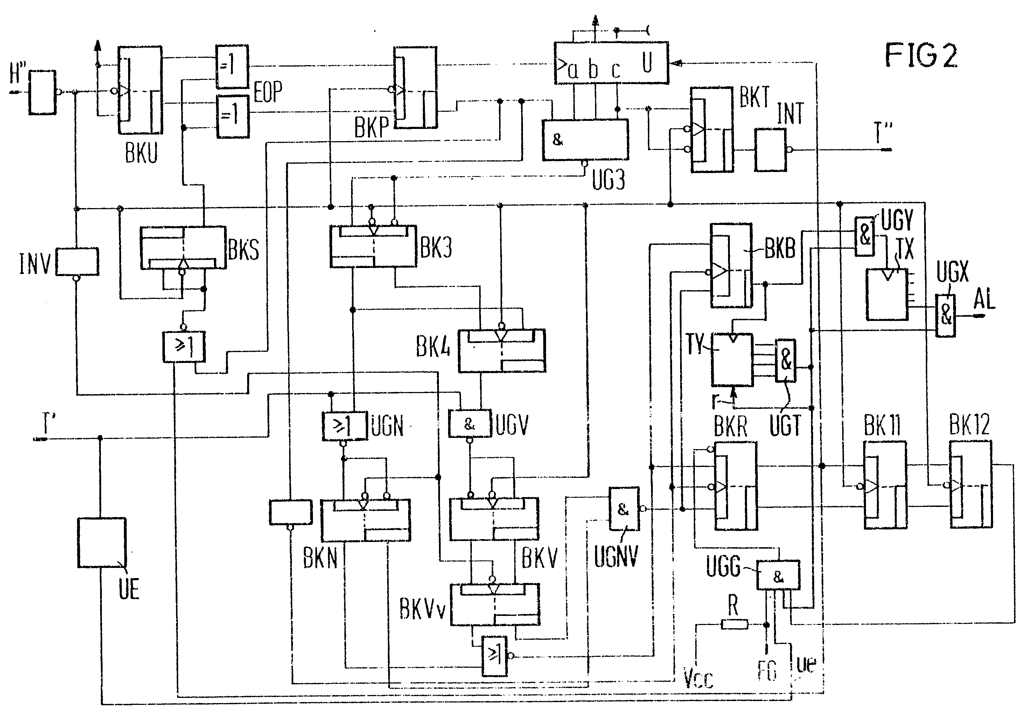

Ein Beispiel dafür, wie die digitale Taktuntersetzungs- und Phasensynchronisierungsschaltung UVR zweckmässig ausgebildet sein kann, ist in der Zeichnung Fig. 2 dargestellt; die Wirkungsweise der Schaltungsanordnung nach Fig. 2 wird durch die in den Zeichnungen Fig. 3 und Fig. 4 dargestellten Schaltzustandsdiagramme verdeutlicht. In der Schaltungsanordnung nach Fig. 2 führt der mit dem die Zwischentaktfrequenz von beispielsweise 32,768 MHz aufweisenden Zwischentakt, wie er in Fig. 3 und Fig. 4 in Zeile H'' dargestellt ist, beaufschlagte Zwischentakteingang H'' zunächst zu einer Zwischentakt-Frequenzhalbierungsstufe in Form eines bistabilen Kippgliedes BKU, dessen Schaltzustände in Fig. 3 und Fig. 4 jeweils in der Zeile $Q_{BKU}$ verdeutlicht sind. Über einen durch zwei EXCLUSIV-ODER-Glieder EOP, denen ein bistabiles Kippglied BKP nachgeschaltet ist, gebildeten Phasenumtaster ist der Zwischentakt-Frequenzhalbierungsstufe BKU ein weiterer Frequenzuntersetzer U nachgeschaltet, der durch einen Binärzähler gebildet sein kann und mit dessen der Amtstaktfrequenz von im Beispiel 2,048 MHz entsprechendem Ausgang c über ein bistabiles Kippglied BKT der Amtstaktausgang T'' des Amtstakterzeugers verbunden ist. Eingangssignale und Schaltzustände des bistabilen Schaltgliedes BKP sind in Fig. 3 und Fig. 4 jeweils in den Zeilen $J_{BKP}$ und $Q_{BKP}$ angedeutet, Schaltzustände des Frequenzuntersetzers U in den Zeilen a, b, c. Jeweils in Zeile T'' ist in Fig. 3 und Fig. 4 der am Amtstaktausgang T'' der Schaltungsanordnung nach Fig. 2 auftretende Amtstakt dargestellt.

An den Frequenzuntersetzer U ist eine Phasenvergleichsschaltung für den Phasenvergleich zwischen dem geführten Amtstakt T'' und dem über eine Leitung T' zugeführten führenden Amtstakt, wie er in Fig. 3 und Fig. 4 jeweils in Zeile T' dargestellt ist, angeschlossen. Diese Vergleichsschaltung weist zunächst zwei Zeitfensterschaltungen auf, die durch ein NAND-Glied UG3 und ein bistabiles Kippglied BK3 sowie ein bistabiles Kippglied BK4 gebildet werden; Schaltzustände der beiden bistabilen Kippglieder sind in Fig. 3 und Fig. 4 in den Zeilen $Q_{BK3}$ und $Q_{BK4}$ dargestellt. Die beiden bistabilen Kippglieder BK3 und BK4 führen zu den jeweils einen Eingängen zweier Verknüpfungsglieder, nämlich des NOR-Gliedes UGN und des UND-Gliedes UGV, die an ihrem jeweils zweiten Eingang mit dem Amtstakt T' des jeweils führenden Amtstakterzeugers beaufschlagt sind. Den beiden Verknüpfungsgliedern UGN und UGV sind bistabile Kippglieder BKN bzw. BKV, BKV nachgeschaltet, deren Schaltzustände in Fig. 3 und Fig. 4 jeweils in den Zeilen $Q_{BKN}$, $Q_{BKV}$, $Q_{BKVv}$ dargestellt sind und die über eine ODER-Schaltung zusammengefasst zu einem bistabilen Kippglied BKR führen. An dieses bistabile Kippglied BKR ist zum einen mit einem besonderen Schalteingang der Frequenzuntersetzer U angeschlossen und zum anderen ein durch ein bistabiles Kippglied BKS gegebenes Stellglied für den Phasenumtaster EOP. Die Schaltzustände der beiden zuletzt genannten bistabilen Kippglieder sind in Fig. 3 und Fig. 4 in den Zeilen $Q_{BKR}$ und $Q_{BKS}$ dargestellt.

Mit Hilfe der Verknüpfungsglieder UGN und UGV und der jeweils nachfolgenden binären Kippglieder BKN bzw. BKV und BKVv wird festgestellt, ob die Phasendifferenz zwischen führendem Amtstakt T' und geführtem Amtstakt T'' einen vorgegebenen Grenzwert überschreitet:

Eilt der geführte Amtstakt T'' gegenüber dem führenden Amtstakt T' soweit nach, dass im Zeitpunkt $t_n$ (in Fig. 3) — d.h. im Zeitpunkt der in dem vom bistabilen Kippglied BK3 bestimmten Zeitfenster (siehe Zeile $Q_{BK3}$ in Fig. 3) auftretenden, unmittelbar vor der negativen Taktflanke des geführten Amtstaktes T'' liegenden negativen Taktflanke des Zwischentaktes H'' — auf der den Amtstakt T' führenden Leitung bereits ein «0»-Signal auftritt, so wird über das NOR-Glied UGN das bistabile Kippglied BKN aktiviert. Unter Berücksichtigung der Arbeitszeiten von Verknüpfungsgliedern, Invertern und bistabilen Kippgliedern ist dies der Fall bei einer Phasendifferenz zwischen führendem Amtstakt T' und geführtem Amtstakt T'', die grösser als

$$\Delta\varphi_{Nmax} = \Delta t_{1max} + \Delta t_{2max} + h/2$$

ist, wobei sich die Bedeutung der einzelnen Summanden unmittelbar aus Fig. 3 ergibt. In der Schaltungsanordnung nach Fig. 2 ist

$$\Delta\varphi_{Nmax} = (t_{UGNmax} + t_{BKNmax} - t_{INVmin}) + (t_{BKTmax} + t_{INTmax}) + h/2,$$

worin die bei den einzelnen Arbeitszeiten angegebenen Indizes jeweils auf den entsprechenden Schaltungsbaustein hinweisen; in der Praxis kann etwa

$$\Delta\varphi_{Nmax} = (5,5 + 3 - 1,2) + (7 + 1,3) + 15,26 = 30,8 \text{ ns}$$

sein.

Eilt umgekehrt der geführte Amtstakt T'' gegenüber dem führenden Amtstakt T' soweit vor, dass im Zeitpunkt $t_v$ (in Fig. 4) — d.h. im Zeitpunkt der am Ende des vom bistabilen Kippglied BK4 bestimmten Zeitfensters (siehe Zeile $Q_{BK4}$ in Fig. 4) auftretenden, unmittelbar hinter der negativen Taktflanke des geführten Amtstaktes T'' liegenden positiven Taktflanke des Zwischentaktes H'' — auf der den Amtstakt T' führenden Leitung noch ein «1»-Signal auftritt, so wird über das UND-Glied UGV das bistabile Kippglied BKV und eine halbe Zwischentaktperiode später das bistabile Kippglied BKVv aktiviert. Unter Berücksichtigung der Arbeitszeiten von Verknüpfungsgliedern, Invertern und bistabilen Kippgliedern ist dies der Fall bei eine Phasendifferenz zwischen geführtem Amtstakt T'' und führendem Amtstakt T', die grösser als

$$\Delta\varphi_{Vmax} = h - \Delta t_{2min} - \Delta t_{1min}$$

ist, wobei sich die Bedeutung der einzelnen Glieder unmittelbar aus Fig. 4 ergibt. In der Schaltungsanordnung nach Fig. 2 ist

$$\Delta\varphi_{Vmax} = h - (t_{BKTmin} + t_{INTmin}) - t_{UGVmin},$$

worin wiederum die Indizes auf die entsprechenden Schaltungsbausteine hinweisen; in der Praxis kann etwa

$$\Delta\varphi_{Vmax} = 30,52 - (1,6 + 1,2) - 1,8 = 25,9 \, ns$$

sein.

Die Grenzwerte $\Delta\varphi_{Nmax}$ und $\Delta\varphi_{Vmax}$ liegen somit beide in der Grössenordnung einer Zwischentaktperiode h von im Beispiel 30,52 ns und jedenfalls unterhalb der zwischen führendem Amtstakt T' und geführtem Amtstakt T'' maximal zugelassenen Phasendifferenz von im Beispiel 35 ns.

Sowohl die Aktivierung des bistabilen Kippgliedes BKN als auch die Aktivierung des bistabilen Kippgliedes BKV bzw. BKVv hat zunächst eine Aktivierung des nachfolgenden bistabilen Kippgliedes BKB zur Folge. Letzteres bewirkt, dass einem Schieberegister TY jeweils Signal zugeführt wird, welches anzeigt, dass der geführte Amtstakt T'' gegenüber dem führenden Amtstakt T' voreilt oder nacheilt. Folgt im Rhythmus des Amtstaktes viermal unmittelbar nacheinander dieses Signal und wird es so dem Schieberegister TY zugeführt, so gibt das Verknüpfungsglied UGT ein Ausgangssignal ab, welches zu dem weiteren Verknüpfungsglied UGG gelangt, wodurch dieses ein Freigabesignal zu einem Sperreingang des bistabilen Kippgliedes BKR abgibt. Ist also über das bistabile Kippglied BKB virmal nacheinander dem Schieberegister TY das besagte Signal zugeführt worden, so wird dadurch das bistabile Kippglied BKR entsperrt. Erfolgt nun ein fünftes Mal eine Aktivierung des bistabilen Kippgliedes BKN oder des bistabilen Kippgliedes BKV bzw. BKVv, so hat dieses eine Aktivierung des nachfolgenden und nun entsperrten bistabilen Kippgliedes zur Folge. Gleichzeitig führt das Ausgangssignal des Verknüpfungsgliedes UGT zum Rücksetzen aller Schieberegisterglieder des Schieberegisters TY über den Rücksetzeingang r. Über die bistabilen Kippglieder BK11 und BK12 wird nach zwei Zwischentaktperioden das Kippglied BKR wieder zurückgesetzt; überdies wird auch vom bistabilen Kippglied BKR aus ein Umschalten des bistabilen Kippgliedes BKS bewirkt. Letzteres hat zur Folge, dass dem Frequenzuntersetzer U über den Phasenumtaster EOP nunmehr ein zum bisherigen Takt inverser Takt zugeführt wird, was sich unmittelbar in einer Verlängerung der gerade auftretenden Halbperiode des geführten Amtstaktes T'' um die Dauer h einer Periode des Zwischentaktes H'' auswirkt, wie dies bei voreilendem geführtem Amtstakt T'' vorgesehen und hierfür in Fig. 4 in Zeile T'' angedeutet ist.

Die Aktivierung des bistabilen Kippgliedes BKR hat in der Schaltungsanordnung nach Fig. 2 ausserdem zur Folge, dass der durch einen Binärzähler realisierbare Frequenzuntersetzer U im Zeitpunkt $t_z$, d.h. zu der während der Aktivierung des bistabilen Kippgliedes BKR auftretenden positiven Taktflanke des Zwischentaktes H'', in den dem Zählzustand 2 entsprechenden Untersetzungszustand gesetzt wird. In diesem Untersetzungszustand gelangt der Frequenzuntersetzer U in diesem Augenblick bei voreilendem geführten Amtstakt T'' (Fig. 4) ohnehin, so dass der Setzvorgang keine weiteren Auswirkungen hat. Bei nacheilendem geführtem Amtstakt T'' (Fig. 3) würde der Frequenzuntersetzer im Zeitpunkt $t_z$ (in Fig. 3) an sich in einen dem Zählzustand entsprechenden Untersetzungszustand gelangen; tatsächlich wird der Frequenzuntersetzer U jetzt aber in den dem Zählzustand 2 entsprechenden Untersetzungszustand gesetzt. Damit wird der Untersetzer U im Ergebnis um einen zusätzlichen Untersetzungsschritt weitergeschaltet, was sich in Verbindung mit der bereits erwähnten Auswirkung der Phasenumtastung in einer Verkürzung der gerade auftretenden Halbperiode des geführten Amtstaktes T'' um die Dauer h einer Periode des Zwischentakts H'' auswirkt, wie sie bei nacheilendem geführten Amtstakt T'' vorgesehen und hierfür in Fig. 3 in Zeile T'' angedeutet ist.

Es folgt somit der geführte Amtstakt T'' dem führenden Amtstakt T' in der Phasenlage. Dabei ist die Phasensynchronisierung aber mit einer gewissen Hysterese behaftet, so dass Jittererscheinungen des führenden Amtstaktes T', wie sie in der Praxis mit Zeitamplituden etwa in der Grössenordnung von 5 ns auftreten können, unbeachtlich bleiben. Der Hysteresebereich ergibt sich aus Fig. 3 und Fig. 4 mit

$$\delta = \Delta\varphi_{Nmin} + \Delta\varphi_{Vmin} - h$$
$$= t_{UGNmin} + t_{BKNmin} - t_{INVmax} - t_{UGVmax} + h/2$$

in der Praxis kann etwa

$$\delta = 1,6 + 3 - 1,2 - 7,5 + 15,26 = 11,2 \, ns$$

sein. Diese Hysterese betrifft also die Tatsache, dass in jeweils einer Voreilung oder einer Nacheilung des geführten Amtstaktes gegenüber dem führendem Amtstakt bestehende Phasenlage-Abweichungen von der Phasensynchronisierung nur erfasst werden, wenn jene in der oben angegebenen Weise ein bestimmtes Mass in der Grössenordnung einer Zwischentaktperiode erreichen. Darüber hinaus aber ist durch die der Phasensynchronisierung dienende Regelungseinrichtung gemäss Fig. 2 und deren Beschreibung gewährleistet, dass die Phasensynchronisierung erst um eine Zeitspanne verzögert nach der mit obiger Hysterese festgestellten Voreilung oder Nacheilung von der Regelungseinrichtung vorgenommen wird. Diese Zeitspanne, die – wie erläutert – vier Zwischentaktperioden entspricht, (ebensogut kann je nach Zweckmässigkeit diese Zahl auch kleiner oder grösser gewählt werden, indem hierzu die Anzahl der Schieberegisterglieder des Schieberegisters BKB und die Anzahl der Eingänge des Verknüpfungsgliedes UGT demgemäss kleiner oder grösser festgelegt wird), ist so bemessen, dass sie mindestens so gross ist wie ein für eine Ausschaltung der Regelungseinrichtung des jeweils geführten Amtstakterzeugers CCG'' bei Ausfall des führenden Amtstaktes erforderlicher Zeitraum.

Die letzten Ausführungen nehmen auf einen noch nicht im einzelnen beschriebenen Sachverhalt Bezug, worauf anschliessend eingegangen sei. Die Schaltungsanordnung nach Fig. 2 weist noch einen Umschaltsignaleingang FG auf, der zu dem Sperreingang des bistabilen Kippgliedes BKR führt. Über diesen Umschaltsignaleingang kann durch ein synchron zum Amtstakt auftretendes Umschaltsignal «0» der bisher geführte Amtstakterzeuger umgeschaltet werden, so dass er nicht mehr nach Massgabe des auf der Leitung T' auftretenden Amtstakts geführt wird; bezogen auf die Schaltungsanordnung nach Fig. 1 vermag der bisher geführte Amtstakterzeuger (CCG'' in Fig. 1) ggf. nunmehr seinerseits den in umgekehrtem Sinne umgeschalteten, bisher führenden Amtstakterzeuger (CCG' in Fig. 1) zu führen, wie dies in Fig. 1 durch eine gestrichelt gezeichnete Verbindung angedeutet ist. Ebenso, wie dieser Umschaltvorgang durch das obige Umschaltsignal von aussen her bewirkt werden kann, ist er auch mittels einer Amtstaktüberwachungseinrichtung UE durchführbar. Diese dient dazu, bei einem geführten Amtstakterzeuger den über den Einang T' eintreffenden führenden Amtstakt zu überwachen.

Bei dessen Ausfall ist nach einer Amtstaktperiode nach der letzten richtig eingetroffenen Amtstaktimpulsflanke dieser Ausfall erkennbar. Stellt nun die Amtstaktüberwachungseinrichtung UE einen solchen Ausfall mittels einer entsprechenden, nach Massgabe der Amtstakt-Zeitwerte eingestellten Zeitüberwachung fest, so führt sie über den Weg ue dem Verknüpfungsglied UGG das Umschaltesignal «0» zu. An dieser Stelle sei zum besseren Verständnis eingefügt, dass das Verknüpfungsglied UGG auch so aufgefasst werden kann, dass es eine Oder-Bedingung erfüllt: Erhält es über alle seine Eingänge das Signal «1», so gibt es das entsperrende Signal «1» auf den Sperreingang des bistabilen Kippgliedes BKR ab. Wenn es über wenigstens einen Eingang das Signal «0» erhält, so gibt es das Sperrsignal zum Sperreingang des bistabilen Kippgliedes BKR hin ab. Durch die oben beschriebene verzögernde Wirkung des bistabilen Kippgliedes BKS wird bei einem geführten Amtstakterzeuger erreicht, dass ein Ausfall des führenden Amtstaktes nicht zu einer Fehlinterpretation führen kann, nämlich zu einer die jeweilige Amtstaktperiode verkürzenden oder verlängernden Phasensynchronisation. Vielmehr wird ein Umschaltevorgang durchgeführt, bevor eine in einem solchen Falle nicht erforderliche, vielmehr aber sich störend auswirkende Phasensynchronisation stattfinden kann.

Nachdem die Beschreibung bis hierher das erfindungsgemässe Ausführungsbeispiel in allgemeinem Sinne erläutert hat, wendet sie sich nun auch den erfindungsgemässen Zusammenhängen zu. Hierzu wird weiterhin auf die Anordnung nach Fig. 2 Bezug genommen. Diese enthält entsprechende Ergänzungen gegenüber der Fig. 2 der DE-A-2 907 608.

Wie bereits ausgeführt wurde, wird von dem bistabilen Kippglied BKB bei dessen Aktivierung durch das bistabile Kippglied BKN oder BKV dem Schieberegister TY jeweils ein Signal zugeführt, welches anzeigt, dass der geführte Amtstakt gegenüber dem führenden Amtstakt T' voreilt oder nacheilt. Folgt im Rhythmus des Amtstaktes viermal nacheinander dieses Signal und wird es so dem Schieberegister TY zugeführt, so gibt das Verknüpfungsglied UGT ein Ausgangssignal ab. Dieses stellt letztlich den Befehl zu einem Phasensynchronisierungsvorgang her, der nunmehr einzuleiten ist (über das Verknüpfungsglied UGG und das bistabile Kippglied BKR, s.o.!).

Dieses Signal, das ausserdem vom Verknüpfungsglied UGT noch zum Rücksetzeingang r des Schieberegisters TY gelangt und dessen sämtliche Schieberegisterglieder wieder rücksetzt, wird zusätzlich auch noch einem Verknüpfungsglied UGY zugeführt. Folgt nach dem viermaligen Auftreten des Ausgangssignals des bistabilen Kippgliedes BKB dieses Signal ein daran im Rhythmus des Amtstaktes sich anschliessendes fünftes Mal, so wird das Verknüpfungsglied UGY ausserdem auch vom bistabilen Kippglied BKB her aktiviert und gibt ein Ausgangssignal zu einem weiteren Schieberegister TX ab, in welchem dieses Ausgangssignal aufgenommen und im Rhythmus des Amtstaktes von Schieberegisterglied zu Schieberegisterglied weitergeschoben wird.

Das Schieberegister TX hat eine speichernde Wirkung mit zeitlicher Begrenzung. Es gibt nach einer durch die Anzahl von Schieberegistergliedern pro Schieberegister gegebenen Anzahl von n (z.B. fünf) Amtstaktperioden ein Ausgangssignal zu einem weiteren bistabilen Verknüpfungsglied UGX ab. Dabei ist vorausgesetzt, dass die Anzahl von Schieberegistergliedern des Schieberegisters TY gleich n-1 (z.B. also vier) ist. Wird nun (eine synchrone Arbeitsweise der beiden Schieberegister TY und TX sei vorausgesetzt) die durch das Schieberegister TY erzielte Verzögerungszeit durch entsprechende Wahl der Anzahl von Schieberegistergliedern auf einen Wert von insgesamt n-1 Amtstaktperioden festgelegt, so gibt, gerechnet vom erstmaligen Auftreten eines eine Phasensynchronisierung anfordernden Eingangssignales beim Schieberegister TY das Verknüpfungsglied UGX nach Ablauf einer Zeit von insgesamt 2n-1 Amtstaktperioden ein Alarmsignal, sofern es sowohl vom Schieberegister TX als auch vom Verknüpfungsglied UGT je ein Ausgangssignal erhält. Diese beiden Voraussetzungen sind erfüllt, wenn das bistabile Kippglied BKB so oft nacheinander ein eine Phasensynchronisierung anzeigendes Ausgangssignal abgibt, dass nach insgesamt 2(n-1) Amtstaktperioden eine zweite Phasensynchronisierung unmittelbar nach einer ersten Phasensynchronisierung durchzuführen sein würde. Durch geeignete Festlegung der Anzahl von Schieberegistergliedern der beiden Schieberegister TY und TX können durch diese erzielte entsprechende Speicherzeiten festgelegt werden, und dadurch kann erreicht werden, dass nicht zweimal unmittelbar nacheinander Phasensynchronisierungen vorgenommen werden; die zweite Phasensynchronisierung wird vielmehr unterbunden und statt dessen wird das Alarmsignal über den Ausgang des Verknüpfungsgliedes UGX auf einen Alarmsignalstrompfad AL abgegeben.

Das Alarmsignal ist dadurch verursacht, dass zum Zeitpunkt der ersten Phasensynchronisierung die Phasendifferenz des geführten Amtstaktes gegenüber dem geführten Amtstakt den eingangs erwähnten Grenzwert zweifach überschreitet (wobei ja bereits die einfache Überschreitung zu der ersten Phasensynchronisierung geführt hat, die aber die Phasendifferenz noch nicht zu beseitigen vermochte, sondern ein Erfordernis für eine weitere Phasensynchronisierung übrig liess), und/oder die Frequenzdifferenz der beiden Zwischentaktgeneratoren (C-PD-VCO', C-PD-VCO'') einen so hohen Betrag erreicht hat, dass unmittelbar nach einer erfolgten ersten Phasensynchronisierung eine zweite Phasensynchronisierung mit gleichem Vorzeichen erforderlich werden würde, also innerhalb einer Zeit von 2n-1 Amtstaktperioden; ersteres (die zweifache Überschreitung) ist verursacht durch eine Falschfunktion der erwähnten Regelungseinrichtung; letzteres (die hohe Frequenzdifferenz) ist verursacht durch einen Fehler eines der Zwischentaktgeneratoren. In beiden Fällen ist eine Ausserbetriebnahme des jeweils geführten Amtstaktgebers vorgesehen, weil Phasensynchronisierungen in so dichter Folge für die taktgesteuerten Einrichtungen nicht zulässig sind. Die Ausserbetriebnahme eines Amtstaktgebers kann von weiteren Fehlerdiagnosevorgängen abhängig gemacht sein.

## Patentansprüche

1. Schaltungsanordnung für Fernmeldeanlagen, insbesondere PCM-Fernsprechvermittlungsanlagen, mit einer doppelt vorgesehenen Amtstaktversorgungsanordnung (CCG', CCG''), von welcher der jeweils eine der beiden Amtstakterzeuger (CCG') einen unabhängig von dem jeweils anderen Amtstakterzeuger (CCG'') erzeugten Amtstakt liefert und der jeweils andere (geführte) Amtstakterzeuger (CCG'') einen mit dem von dem jeweils einen (führenden) Amtstakterzeuger (CCG') gelieferten Amtstakt zumindest angenähert phasengleich synchronisierten Amtstakt liefert und seinen Amtstakt mit dem Amtstakt des jeweils einen Amtstakterzeugers (CCG') vergleicht und bei Feststellung einer einen Grenzwert überschreitenden Phasendifferenz eine Halbperiode des geführten Amtstaktes mit Hilfe einer Regelungseinrichtung (BKR) bei nacheilendem geführtem Amtstakt verkürzt und bei voreilendem geführten Amtstakt verlängert und bei weiterhin voreilendem bzw. nacheilendem Amtstakt innerhalb eines Zeitraumes nach bereits erfolgter Amtstaktverkürzung bzw. Amtstaktverlängerung ein Alarmsignal einschaltet. dadurch gekennzeichnet, dass der jeweils geführte Amtstakterzeuger (zum Beispiel UVR'') ein erstes von zwei gleichen, und entweder eine Verkürzung oder eine Verlängerung einer Halbperiode seines Amtstakts anzeigenden Schaltkennzeichen mit Hilfe eines durch den Amtstakt selbst fortgeschalteten und dessen Impulse abzählenden ersten Schieberegisters (TY) speichert und bei einer erneuten Überschreitung des Grenzwertes innerhalb eines durch eine vorgegebene Anzahl von Amtstaktperioden begrenzten und mit Hilfe eines ebenfalls durch den Amtstakt fortgeschalteten und dessen Impulse abzählenden zweiten Schieberegisters (TX) abgemessenen Zeitraumes die Abgabe des Alarmsignals anstelle einer erneuten Verkürzung oder Verlängerung einer Halbperiode des Amtstaktes bewirkt.

2. Schaltungsanordnung nach Anspruch 1, dadurch gekennzeichnet, dass die durch die vorgegebene Anzahl von Amtstaktperioden begrenzte Verzögerungszeit mindestens so gross ist wie der Zeitraum, nach welchem ein Alarmsignal eingeschaltet wird.

## Claims

1. A circuit arrangement for telecommunications systems, in particular PCM telephone exchange systems, with a duplicated exchange clock supply arrangement (CCG', CCG''), of which the respective first of the two exchange clock generators (CCG') supplies an exchange clock signal which is generated independently of the respective other exchange clock generator (CCG''), and the respective other (slave) exchange clock generator (CCG'') supplies an exchange clock signal which is synchronised so as to be at least approximately in phase with the exchange clock signal supplied by the respective first (master) exchange clock generator (CCG'), and compares its exchange clock signal with the exchange clock signal of the respective first exchange clock generator (CCG'), and in the event that a phase difference which exceeds a limit value is determined, with the assistance of a regulating device (BKR) in the event of a lagging slave exchange clock signal shortens one half period of the slave exchange clock signal, and in the event of a leading slave exchange clock signal lengthens one half period of the slave exchange clock signal, and in the event of the continued leading or lagging of the exchange clock signal within a time interval following the shortening or lengthening respectively of the exchange clock signal switches on an alarm signal, characterised in that the respective slave exchange clock generator (for example UVR'') stores a first of two identical switching characteristics, which indicate either a shortening or a lengthening of one half period of its exchange clock signal, by means of a first shift register (TY) which is stepped on by the exchange clock signal itself and counts the pulses of the exchange clock signal, and in the event that the limit value is again exceeded within a time interval which is delimited by a predetermined number of exchange clock periods and which is apportioned by means of a second shift register (TX), which is likewise stepped on by the exchange clock signal and counts the pulses of the exchange clock signal, causes the alarm signal to be emitted in place of a further reduction or lengthening of one half period of the exchange clock signal.

2. A circuit arrangement as claimed in claim 1, characterised in that the delay time, which is delimited by the predetermined number of exchange clock periods, is at least equal to the time interval following which an alarm signal is switched on.

**Revendications**

1. Montage pour des installations de télécommunications, notamment des installations de commutation téléphonique MIC, comportant un dispositif (CCG', CCG") délivrant des cadences de service, qui est prévu en double et dans lequel un premier (CCG') des deux générateurs délivrant des cadences de service délivre une cadence de service produite indépendamment du second générateur (CCG") délivrant une cadence de service et dans lequel le second générateur (asservi) (CCG") délivrant une cadence de service délivre une cadence de service synchronisée, en étant au moins approximativement en phase, avec la cadence de service délivrée par le premier générateur (pilote) (CCG') délivrant une cadence de service, compare sa cadence de service à la cadence de service du premier générateur (CCG') délivrant une cadence de service, et, lors de la détermination d'une différence de phase dépassant une valeur limite, raccourcit une demi-période de la cadence de service asservie, à l'aide d'un dispositif de régulation (BKR), lorsque cette cadence de service asservie est en retard, et prolonge une demi-période de cette cadence de service asservie, lorsqu'elle est en avance, et, dans le cas où la cadence de service est encore en avance ou en retard, déclenche un signal d'alarme au bout d'un intervalle de temps intervenant après que la cadence de service a été avancée ou retardée, caractérisé par le fait que le générateur asservi délivrant une cadence (par exemple UVR") mémorise un premier de deux indicatifs de commutation indiquant soit un raccourcissement, soit un allongement d'une demi-période de sa cadence de service, à l'aide d'un premier registre à décalage (TY), que la cadence de service elle-même fait avancer et qui décompte les impulsions de cette cadence et déclenche la délivrance du signal d'alarme à la place d'un nouveau raccourcissement ou d'un nouvel allongement d'une demi-période de la cadence de service, dans le cas d'un nouveau dépassement de la valeur limite au cours d'un intervalle de temps délimité par un nombre prédéterminé de périodes de la cadence de service et mesuré à l'aide d'un second registre à décalage (TX), que la cadence de service fait également avancer et qui décompte les impulsions de cadence.

2. Montage suivant la revendication 1, caractérisé par le fait que le temps de retard délimité par le nombre prédéterminé de périodes de la cadence de service est au moins égal à l'intervalle de temps, au bout duquel un signal d'alarme est déclenché.

## FIG1

FIG 2

FIG 3

FIG 4